# EUROPEAN PATENT APPLICATION

(11) **EP 0 832 922 A2**
(43) Date of publication of application: **01.04.1998**
(21) Application number: 97122237.7
(22) Date of filing: 17.12.1997
(51) Int. Cl.: C08K 9/12, C08L 57/08, C08J 3/24

(54) **Composite curing compositions for the halogen containing polymers**

(30) Priority: 04.08.1997 US 905340
(71) Applicant: R.T. VANDERBILT COMPANY, Inc., Norwalk, Connecticut 06856-5150 (US)
(72) Inventor: Ohm, Robert F., Monroe, Connecticut 06468 (US)
(74) Representative: Cohausz & Florack

(57) **Abstract**

The present invention provides a composite curing composition composed of medium active magnesium oxide and absorbed thereon an alkyl ether or alkyl thioether derivative of 2,5-dimercapto-1,3,4-thiadiazole and its dimer. A method is disclosed for curing chlorine containing polymers by using the composite curing composition.

## Description

The present invention relates to composite curing compositions based on ether derivatives of 2,5-dimercapto-1,3,4-thiadiazole compounds and their use in curing chlorine-containing polymers.

Generally, chlorine-containing polymers are compounded with curatives and other ingredients for crosslinking into vulcanizates for use in various industrial and consumer applications. These various compounding ingredients are reactive chemical substances and interact when stored together. Interaction also occurs when the compounding ingredients are predispersed together in a polymeric solvent prior to incorporation into the polymeric resin. A chemical reaction or eutectic behavior occurs resulting in inconsistent curing times, shorter processing times and inferior vulcanizate product.

To preserve the integrity and reactivity of the individual compounding ingredients, various physical barriers have been devised as a means of preventing the premature reaction of chemicals. For example, individual compounding ingredients have been placed in plastic bags in preweighed amounts or in pockets of elastomeric sheets.

A particular problem is magnesium oxide which is used for curing neoprene. Exposure of magnesium oxide to atmospheric moisture and carbon dioxide can cause a considerable loss in activity even when exposure is for brief periods. To alleviate the problem, magnesium oxide has been packed in polyethylene bags which are dispersed unopened in the resin. Care, however, must be taken that no undispersed polyethylene remains in the batch after the mixing operation. Atmospheric exposure of magnesium oxide is also minimized by mixing with an inert oil and forming a paste. A disadvantage of using the paste is that not all formulations may be compatible with the oil used and the oil may not be suitable for a particular application.

Surprisingly, it has been discovered that certain ether derivatives of 2,5-dimercapto-1,3,4-thiadiazole accelerators can be absorbed on magnesium oxide without loss of activity or their curative functionality.

### SUMMARY OF THE INVENTION

In accordance with the invention, there is provided an improved composite curing composition consisting of magnesium oxide having medium activity and absorbed thereon an ether derivative of 2,5-dimercapto-1,3,4-thiadiazole having the formula I or II 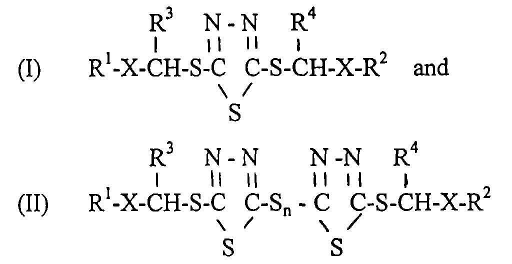 wherein n = 1-2, X represents O or S and R¹ and R² are selected independently from linear or branched chain alkyl groups having 1 to 8 carbon atoms, and R³ and R⁴ represent hydrogen or R¹ and R² groups.

Another aspect of the invention concerns a method of curing neoprene by using a composite curing composition consisting of magnesium oxide having medium activity and absorbed thereon an ether derivative of 2,5-dimercapto-1,3,4-thiadiazole having the structural formula I or II defined hereinabove.

### DETAILED DESCRIPTION OF THE INVENTION

Any saturated or unsaturated chlorine containing polymer containing at least one percent and preferably about five percent by weight of chlorine may be crosslinked in accordance with the invention. The chlorine content may range up to 40 percent based on the weight of the polymer. Common chlorine-containing polymers are chloroprene hompolymers or copolymers of chloroprene and 2,3-dichloro-1,3-butadiene. There are a variety of types of chloroprene based synthetic elastomers. The polymers are known as neoprenes and are available commercially.

Specific types such as Neoprene W and the like are cured with curing systems that are selected for processing safety as well as yielding vancanizates of the desired properties. Neoprenes are cured in the presence of magnesium oxide. The composite composition of the invention is based on caustic-calcined magnesia. The caustic-calcined magnesia is produced from natural or synthetic magesite, dolomite, magnesium rich brine and shaft kiln by calcining below 900°C and is characterized by moderate to high activity. The product is available in various grades determined by purity, particle size and reactivity.

The activity of magnesium oxide is characterized by surface area. The compositions of the invention are based on medium activity magnesium oxide having surface area 1 to 120 m²/g, preferably 10 to 100 m²/g and most preferably 30 to 80 m²/g.

The medium activity magnesium oxide is compatible with ether and thioether derivatives of 2,5-dimercapto-1,3,4-thiadiazoles. The ether derivatives are generally liquid and difficult to uniformly incorporate into the polymer. In the past, these liquid curing agents have been formulated on inert materials such as silica and the like which do not interfere with the vulcanization of the polymer, but serve no purpose in the vulcanization process. Magnesium oxide then has been added separately as disclosed in U.S. Pat. Application Ser. No. 08/574,567.

The ether compounds are derived either from one molecule of 2,5-dimercapto-1,3,4-thiadiazole or its dimer and have the structural formula 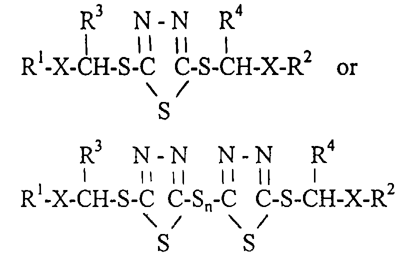 wherein n=1-2, X represents O or S. The R¹, R^{2,} R³ and R⁴ groups are the same or different alkyl groups having 1 to 8 carbon atoms and R³ and R⁴ can be hydrogen. Examples of suitable groups include linear or branched alkyl radicals such as methyl, ethyl, propyl, butyl, isobutyl, hexyl, 2-ethylhexyl, octyl and the like.

The compounds are not novel per se. The ether compounds within the scope of the above formulae are described in U.S. Pat. No. 5,194,621 and are useful antiwear agents and antioxidants for lubricants.

The ether compound can be absorbed on magnesium oxide in any proportions as long as the surface of the oxide is protected from atmosphere. For ease of formulation into the polymer, the preferred ratios are 1:1 and 1:2 ether to magnesium oxide.

The amount of the ether or thioether active ingredient effective to cure the chlorinated polymer composition will vary as a function of the chlorine content of the elastomer. Generally, it is employed in the range from about 0.1 to about 10.0 parts by weight per 100 parts by weight of chlorinated polymer present in the curable composition, more preferably in the range of about 0.5 to about 5.0 parts by weight per 100 parts by weight of chlorinated polymer.

In case of polymers having relatively unreactive chlorine substituent, it is preferable to use a secondary accelerator of the aliphatic or aromatic amine type. Suitable accelerators, among others, include the reaction product of butyraldehyde and aniline, available commercially under the trade name VANAX®808 from R.T. Vanderbilt Company, Inc., fatty amines, and quaternary ammonium salts, such as tetrabutylammonium bromide and tetraethylammonium chloride.

For curing blends of chlorinated and non-chlorinated polymers, sulfur or other well known sulfur-containing curatives for unsaturated elastomers may be included in the composition.

Other additives that may be desirable for crosslinking with the ether and thioether derivatives include basic metal oxides, metal hydroxides and metal salts of carboxylic acids. Typical additives include zinc oxide, zinc stearate and sodium acetate.

In addition to the curatives, the polymer composition may include antioxidants as for example octylated diphenylamine, diphenyl-p-phenylenediamine and styrenated phenol type antioxidants.

The vulcanizable composition may be prepared and blended using any suitable mixing device such as a two-roll mill, an internal mixer (Brabender Plasticorder), a Banbury Mixer, a kneader or a similar mixing device. The processing and vulcanization techniques are well known in the art.

The following examples are given to further illustrate the invention. All percentages and parts are based on weight unless otherwise indicated.

### EXAMPLE 1

Vulcanizate compositions were prepared by compounding Neoprene W with compounding ingredients 2,5-dibutoxymethylthio-1,3,4-thiadiazole (DMTD ether) curing agent. In test sample 1, the DMTD ether was absorbed on 30% inert filler. In test sample 2 of the invention, 47.4% DMTD ether was absorbed on 52.6% medium magnesium oxide having surface area of 50m²/g.

The vulcanizates were press cured at 160°C for 20 minutes. The physical properties of the vulcanizates were evaluated by the following test methods: Torque and scorch time by ASTM D2084, Mooney parameters by ASTM D1646 using a rotor, physical properties by ASTM D412 and D2250 and compression set by ASTM D395, Method B.

The results compiled in Table I demonstrate the compatibility of the composite sample of the invention. The curative of the invention showed a long delay before the onset of the cure as indicated by the scorch times and they attained full cure in 2 to 4 minutes once crosslinking began. See the results of times tc 90 minus ts 2. The rheometer cure test further indicate the desirable curing characteristics of the composition of the invention.

The above embodiments have show various aspects of the present invention. Other variations will be evident to those skilled in the art and such modifications are intended to be within the scope of the invention as defined by the appended claims.

**TABLE I**

| Ingredients | Vulcanizates, parts by weight | |
|---|---|---|
| | 1 | 2 |
| Neoprene W | 100.00 | 100.0 |
| Stearic acid | 0.5 | 0.5 |
| Carbon black | 60.0 | 60.0 |
| Plasticizer¹ | 5.0 | 5.0 |
| Octylated diphenylamine | 2.0 | 2.0 |
| Zinc oxide | 5.0 | 5.0 |
| Magnesia | 2.0 | -- |
| DMTD ether | 2.57 | -- |
| Magnesia/DMTD ether | 0.0 | 3.8 |

| Physical Properties | | |
|---|---|---|
| Press cured 15 min. at 160°C, minutes | | |
| 200% Modules, psi | 1890 | 1965 |
| Tensile strength, psi | 3076 | 3032 |
| Elongation, percent | 351 | 332 |
| Hardness, Shore A | 65.5 | 68 |
| Compression set 22 hours at 100°C, cured at 20 min. at 160°C set, percent | 12 | 12.5 |

| Rheometer at 160°C, 100 CPM, 3° Arc, 20 sec. | | |
|---|---|---|
| Minimum torque, in.-lb. | 10.8 | 11 |
| Maximum torque, in.-lb. at 30 min. | 92.8 | 94.8 |
| Scorch time (ts2) min. | 2.8 | 2.9 |
| Cure time (tc90) min. | 5.0 | 5.1 |
| Cure rate Index, tc90-ts2 | | |

| Mooney at 121°C | | |
|---|---|---|
| Scorch, t5, minutes | 24.0 | 29.7 |
| Viscosity, ML | 44 | 45 |

| | | |
|---|---|---|
| ¹SUNDEX 790®, aromatic oil, manufactured by Sun Oil Company | | |

## Claims

1. A composite curing composition for chlorine containing polymers consisting of medium active magnesium oxide having surface area of 1 to 120 m²/g and absorbed thereon an ether derivative of 2,5-dimercapto-1,3,4-thiadidazole having the formula I or II 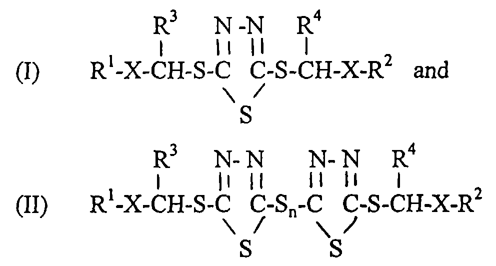 wherein n=1-2, X represent O or S, R¹ and R² represent linear or branched chain alkyl groups having 1 to 8 carbon atoms and R³ and R⁴ represent hydrogen or alkyl groups having 1 to 8 carbon atoms.

2. A composition according to claim 1 wherein the ether derivative is 2,5-dibutoxymethyl-1,3,4-thiadiazole.

3. A composition according to claim 1 wherein the ether derivative is 2,2'-di(butoxymethyl)-5,5'-dithiobis(1,3,4-thiadiazole).

4. A composition according to claim 1 wherein magnesium oxide has a surface area of 50 m²/g.

5. A method for preparing a vulcanized composition of a chlorinated polymer comprising the steps of
(a) adding to said chlorinated polymer a composite curing composition consisting of medium magnesium oxide having surface area of 1 to 120 m²/g and absorbed thereon an ether derivative of 2,5-dimercapto-1,3,4-thiadiazole having the formula I or II 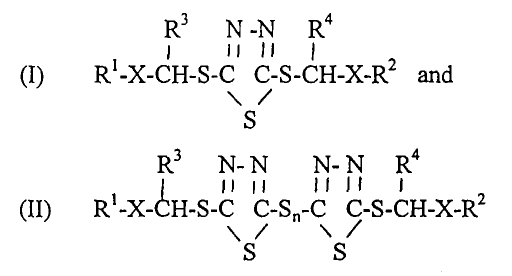 wherein n = 1-2, X represent O or S, R¹ and R² represent linear or branched chain alkyl groups having 1 to 8 carbon atoms, and R³ and R⁴ represent hydrogen or alkyl groups having 1 to 8 carbon atoms in an amount ranging from about 0.1 to 10 parts by weight per hundred parts by weight of chlorinated polymers.
(b) adding other compounding ingredients and
(c) curing at a curing temperature and for a period of time sufficient to cure said composition.

6. A method for preparing a vulcanized composition of a chlorinated polymer according to claim 5 wherein the compounding ingredients further comprise zinc oxide.

7. A method for preparation of vulcanized composition according to claim 5 wherein the polymers is Neoprene W.

8. A method according to claim 5 wherein the ether is 2,5-dibutyoxymethyl-1,3,4-thiadiazole.
